# EUROPÄISCHE PATENTANMELDUNG

(11) **EP 3 992 058 A1**
(43) Veröffentlichungstag der Anmeldung: **04.05.2022**
(21) Anmeldenummer: 21200390.9
(22) Anmeldetag: 01.10.2021
(51) Int. Cl.: B62B 3/06, B62B 5/00, B66F 9/06, B66F 9/075, G01B 11/02, G06Q 50/28, B66F 9/24

(54) **VERFAHREN ZUM TRANSPORTIEREN EINES WARENTRÄGERS MITTELS EINES ZUMINDEST TEILWEISE AUTOMATISIERT BETREIBBAREN FLURFÖRDERFAHRZEUGS**

(30) Priorität: 19.10.2020 DE 102020213124
(71) Anmelder: Robert Bosch GmbH, 70442 Stuttgart (DE)
(72) Erfinder: Roethling, Frank, 70469 Stuttgart (DE); Strouhal, Patrick, 71540 Murrhardt (DE)

(57) **Zusammenfassung**

Die Erfindung betrifft ein Verfahren zum Transportieren eines Warenträgers (1) mittels eines zumindest teilweise automatisiert betreibbaren Flurförderfahrzeugs (2), bei dem zumindest folgende Schritte automatisiert von dem Flurförderfahrzeug (2) durchgeführt werden:
a) Erfassen einer Information über die Länge (3) des Warenträgers (1),
b) Prüfen der erfassten Information über die Länge (3) des Warenträgers (1) in Relation zu einer Gesamtlänge (4) einer Ladefläche (5) einer Ladeplattform (6) des Flurförderfahrzeugs (2),
c) Durchführen eines mehrstufigen Aufladevorgangs oder Abladevorgans, umfassend zumindest ein Umladen des Warenträgers (1) auf der Ladeplattform (6), wenn die Länge (3) des Warenträgers (1) kleiner ist als die Gesamtlänge (4) der Ladefläche (5).

## Beschreibung

Die Erfindung betrifft ein Verfahren zum Transportieren eines Warenträgers mittels eines zumindest teilweise automatisiert betreibbaren Flurförderfahrzeugs. Weiterhin werden auch ein Computerprogramm, ein maschinenlesbares Speichermedium, ein Steuergerät sowie ein Flurförderfahrzeug angegeben. Die Erfindung kann insbesondere zur möglichst platzsparenden Lagerung von 400er und 600er Dollys (Warenträger) Anwendung finden.

### Stand der Technik

Zumindest teilweise automatisiert oder sogar autonom betreibbare Flurförderfahrzeuge sind bekannt, diese können allgemein auch als (automatisierte bzw. autonome) Flurförderzeuge (engl.: Automated Guided Vehicles; kurz: AGVs) bezeichnet werden. Entsprechende Flurförderfahrzeuge sind beispielsweise in der EN 1525 definiert. Um einen möglichst sicheren Transport realisieren zu können, sollte das Transportgut, welches üblicherweise in einem Warenträger (in dem betreffenden Gebiet häufig auch als "Dolly" bezeichnet) gelagert ist, möglichst nahe am Schwerpunkt des Flurförderfahrzeugs transportiert werden.

Bei Flurförderfahrzeugen mit einem (relativ zur Ladefläche bzw. Ladeplattform) erhöhten Vorderaufbau soll der Warenträger üblicherweise so aufgeladen werden, dass dessen vordere Stirnseite (möglichst formschlüssig) an oder zumindest möglichst dicht an der Rückseite bzw. der rückwärtigen Stirnwand des Vorderaufbaus angeordnet ist bzw. an dieser angrenzt, wodurch ein Vornüberkippen und/oder eine Beschädigung der Ladung (des Transportgutes in dem Warenträger) bei einem Not-Halt und/oder abruptem Bremsvorgang in Fahrtrichtung möglichst verhindert werden soll.

Daher sind für einen automatisierten Betrieb, der in der Regel auch automatisierte Aufladevorgänge umfasst, Sensoren in oder an dem Flurförderfahrzeug vorteilhaft, die dazu dienen, die korrekte Positionierung des Warenträgers auf der Ladeplattform zu überwachen. Häufig kommen in diesem Zusammenhang mindestens zwei in Längsrichtung zueinander beabstandete Ladeplattform-Sensoren zum Einsatz. Dies beschreibt Sensoren, die zur Erfassung der Positionierung des Warenträgers auf der Ladeplattform in und/oder an der Ladeplattform angeordnet sind. Entsprechende Sensoren sind insbesondere für einen Mischbetrieb, bei dem mit einem Flurförderfahrzeug nacheinander Warenträger unterschiedlicher Länge automatisiert aufgeladen und transportiert werden sollen wichtig. Insbesondere für den Mischbetrieb ist man bisher davon ausgegangen, dass die Verwendung von mindestens zwei in Längsrichtung zueinander beabstandeten Ladeplattform-Sensoren, von denen der eine (vordere Ladeplattform-Sensor) für die korrekte Lagerung auf der Ladeplattform und der andere (hintere Ladeplattform-Sensor) für die Erkennung der Länge des Warenträgers zuständig sind, unerlässlich ist.

Beim Mischbetrieb kommt es darüber hinaus üblicherweise dazu, dass auf einer Lagerfläche zum Lagern der Warenträger für einen automatisierten Transport, wie beispielsweise in einer "Supermarktspur" beim Lagern der kürzeren Warenträger (zum Beispiel: 400er Dolly) Lücken zwischen den Warenträgern entstehen, da die Ladeplattform üblicherweise auf das längere bzw. längste zu transportierende Transportgut ausgelegt ist (zum Beispiel auf ein 600er Dolly). Zudem sollte ausreichend Raum zwischen den Warenträgern für ein Heben und Senken der Ladeplattform vorgehalten werden.

Hiervon ausgehend liegt der Erfindung die Aufgabe zugrunde, die im Zusammenhang mit dem Stand der Technik beschriebenen Nachteile bzw. Probleme zumindest teilweise zu lösen. Insbesondere soll bei einem zumindest teilweise automatisiert betreibbaren Flurförderfahrzeug, welches insbesondere auch für einen Mischbetrieb geeignet sein soll, bei gleichwohl möglichst hoher Betriebssicherheit, die Abstellfläche zum Lagern von abgeladenen bzw. aufzuladenden Warenträgern insgesamt reduziert werden. Insbesondere soll der Raumbedarf in Supermarktspuren zum Lagern von Warenträgern für einen automatisierten Transport reduziert werden.

### Offenbarung der Erfindung

Diese Aufgaben werden durch die Merkmale der jeweiligen unabhängigen Ansprüche gelöst. Vorteilhafte Ausgestaltungen ergeben sich aus den Unteransprüchen.

Hierzu trägt ein Verfahren zum Transportieren eines Warenträgers mittels eines zumindest teilweise automatisiert betreibbaren Flurförderfahrzeugs bei, bei dem zumindest folgende Schritte automatisiert von dem Flurförderfahrzeug durchgeführt werden:
a) Erfassen einer Information über die Länge des Warenträgers,
b) Prüfen der erfassten Information über die Länge des Warenträgers in Relation zu einer Gesamtlänge einer Ladefläche einer Ladeplattform des Flurförderfahrzeugs,
c) Durchführen eines mehrstufigen Aufladevorgangs oder Abladevorgans, umfassend zumindest ein Umladen des Warenträgers auf der Ladeplattform, wenn die Länge des Warenträgers kleiner ist als die Gesamtlänge der Ladefläche.

Die Schritte a), b) und c) können zur Durchführung des Verfahrens beispielsweise zumindest einmal und/oder wiederholt in der angegebenen Reihenfolge durchgeführt werden. Das Verfahren kann beispielsweise mittels eines hier auch beschriebenen Steuergeräts und/oder eines hier auch beschriebenen Systems und/oder eines hier auch beschriebenen Flurförderfahrzeugs durchgeführt werden. Bei dem Verfahren können zumindest die Schritte a), b) und c) vorteilhaft autonom von dem Flurförderfahrzeug durchgeführt werden.

Das Verfahren dient insbesondere zum Transportieren mehrerer Warenträger im Mischbetrieb. Ein Mischbetrieb beschreibt dabei üblicherweise den Betriebsmodus, bei dem mit einem (demselben) Flurförderfahrzeug nacheinander Warenträger unterschiedlicher Länge automatisiert transportiert werden (sollen). Das Verfahren trägt in vorteilhafter Weise dazu bei, dass die Abstellfläche zum Lagern von abgeladenen bzw. aufzuladenden Warenträgern insgesamt reduziert werden kann. Hierzu wird erstmals ein Verfahren angegeben, durch welches kürzere Warenträger in vorteilhafter Weise über einen Auf-Ab-Auflade-Algorithmus aufgeladen werden können, der eine (möglichst dichte) Aneinanderreihung der Warenträger und damit eine vorteilhafte Raumausnutzung beispielsweise einer Supermarktspur ermöglicht. Beim Abladen in beispielsweise einer Supermarktspur kann in vorteilhafter Weise ein Ab-Auf-Ablade-Algorithmus eine vorteilhafte (möglichst dichte) Aneinanderreihung von Warenträgern ermöglichen. Gemäß einer bevorzugten Ausgestaltung des Verfahrens kann weiterhin mittels eines vorhandenen Sicherheitssensors als Sensor-Einrichtung eine Erkennung der Länge des Warenträgers während des Aufladens ermöglicht werden. Dadurch kann in vorteilhafter Weise ein (bisher üblicher) hinterer Ladeplattform-Sensor eingespart werden.

Bei dem Flurförderfahrzeug kann es sich beispielsweise um ein solches handeln, wie es in der EN 1525 definiert ist. Das Flurförderfahrzeug kann für einen zumindest teilweise automatisierten und/oder autonomen (Fahr-)Betrieb eingerichtet sein. Das Flurförderfahrzeug weist in der Regel eine Ladeplattform auf. Die Ladeplattform weist eine Ladefläche auf, auf welcher im aufgeladenen Zustand eine untere (jedoch nicht zwangsläufig unterste) Seite des Warenträgers aufliegen kann. Weiterhin kann das Flurförderfahrzeug einen Vorderaufbau aufweisen. Der Vorderaufbau hat in der Regel hin zu der Ladeplattform eine im wesentlichen vertikale Rückwand. In dem Bereich, in dem die Ladeplattform an die Rückwand angrenzt bzw. an dieser endet, kann ein Ladeplattform-Sensor des Flurförderfahrzeugs angeordnet sein. Der Ladeplattform-Sensor dient üblicherweise zur Erkennung der korrekten Lagerung des Warenträgers auf der Ladeplattform. Der Ladeplattform-Sensor kann beispielsweise ein induktiver Sensor sein.

Bei dem Warenträger kann es sich beispielswiese um einen Rollwagen handeln, in und/oder auf dem Transportgüter insbesondere zum Transport gelagert werden können. Der Warenträger kann mit mindestens zwei in seitlicher Richtung zueinander beabstandeten Vorderrädern und mit mindestens zwei in seitlicher Richtung zueinander beabstandeten Hinterrädern ausgestattet sein. Der seitliche Abstand dieser Räder kann beispielsweise jeweils so dimensioniert sein, dass der Warenträger derart von dem Flurförderfahrzeug unterfahren werden kann, dass der Warenträger (durch das Unterfahren) auf einer Ladeplattform des Flurförderfahrzeugs aufgeladen werden kann. Entsprechende Warenträger können allgemein auch als "Dolly" bezeichnet werden. Die Vorderräder und die Hinterräder weisen weiterhin je nach Länge des Warenträgers in der Regel einen bestimmten Abstand in Längsrichtung zueinander auf. Somit können die Vorderräder und die Hinterräder hier als besonders vorteilhaftes Identifikationsmittel für die Länge des Warenträgers dienen. Alternativ oder kumulativ können an dem Warenträger in Längsrichtung mit einem bestimmten Abstand zueinander beabstandete (andere) Identifikationsmittel, die von der (unten näher erläuterten) Sensor-Einrichtung erfasst werden können, vorgesehen sein. Beispielswiese kann in diesem Zusammenhang mindestens ein vorderes Identifikationsmittel und mindestens ein hinteres Identifikationsmittel vorhanden sein. Der Längsabstand zwischen dem vorderen Identifikationsmittel und dem hinteren Identifikationsmittel kann vorteilhaft charakteristisch für den Typ des Warenträgers und/oder die Länge des Warenträgers sein.

Bei der Information über die Länge des Warenträgers kann es sich beispielweise unmittelbar um die Länge des Warenträgers oder um eine Information, die einen Rückschluss auf die Länge des Warenträgers erlaubt, handeln. Die Information kann beispielsweise charakteristisch für einen bestimmten Typ von Warenträger sein. Dadurch kann die Ausführungsform vorteilhaft auch zu einer Unterscheidung beitragen, welcher Typ Warenträger (aus einer definierten Anzahl von Typen von Warenträgern) auf das Flurförderfahrzeug aufgeladen wird. Besonders vorteilhaft kann in diesem Zusammenhang eine Unterscheidung zwischen den zwei Typen 400er Dolly (400mm langer Warenträger) und 600er Dolly (600mm langer Warenträger) vorgenommen werden.

In Schritt a) erfolgt ein Erfassen einer Information über die Länge des Warenträgers. Das Erfassen kann beispielsweise ein Ermitteln mittels einer Sensor-Einrichtung des Flurförderfahrzeugs umfassen oder zumindest auf eine solche Ermittlung zurückgreifen. Beispielsweise kann bei einem Aufladen eines Warenträgers ein Ermitteln gemäß den unten beschriebenen Schritten i) bis iii) zur Erfassung der Information durchgeführt werden. Weiterhin kann beispielsweise bei einem Abladen eines Warenträgers auf eine während des Aufladens dieses Warenträgers ermittelte Information zurückgegriffen werden, die beispielsweise aus einem Speicher des Flurförderfahrzeugs eingelesen werden kann.

In Schritt b) erfolgt ein Prüfen der erfassten Information über die Länge des Warenträgers in Relation zu einer Gesamtlänge einer Ladefläche einer Ladeplattform des Flurförderfahrzeugs. Insbesondere kann dabei geprüft werden ob der Warenträger kürzer ist als die Gesamtlänge der Ladefläche oder nicht. Es kann (alternativ oder kumulativ) auch geprüft werden ob ein bestimmter Typ von Warenträger (zum Beispiel 400er Dolly) aufgeladen wird (bzw. zuletzt unterfahren wurde) oder abzuladen ist, von dem bekannt ist, dass er kürzer ist als die Gesamtlänge einer Ladefläche.

In Schritt c) erfolgt ein Durchführen eines mehrstufigen Aufladevorgangs oder Abladevorgans, (jeweils) umfassend zumindest ein Umladen des Warenträgers auf der Ladeplattform, wenn die Länge des Warenträgers kleiner ist als die Gesamtlänge der Ladefläche. Das Umladen wird dabei ebenfalls automatisiert von dem Flurförderfahrzeug durchgeführt, beispielsweise erfolgt das Umladen allein mittels (Fahr- und Hub-)Bewegungen des Flurförderfahrzeugs.

Nach einer vorteilhaften Ausgestaltung wird vorgeschlagen, dass zum Ermitteln der Information über die Länge des Warenträgers zumindest folgende Schritte automatisiert von dem Flurförderfahrzeug durchgeführt werden:
i) Anfahren einer relativ zu dem Warenträger vordefinierten, initialen Position, wobei das Erreichen der initialen Position mittels einer Sensor-Einrichtung des Flurförderfahrzeugs detektiert wird,
ii) Abfahren einer vordefinierten Strecke entlang der Längsrichtung des Warenträgers, ausgehend von der initialen Position,
iii) Durchführen eines weiteren Detektionsvorgangs mittels derselben Sensor-Einrichtung des Flurförderfahrzeugs, nachdem die vordefinierte Strecke abgefahren wurde.

Die Schritte i), ii) und ii) können beispielsweise zumindest einmal und/oder wiederholt in der angegebenen Reihenfolge durchgeführt werden. Die Schritte i), ii) und ii) können vorteilhaft autonom von dem Flurförderfahrzeug durchgeführt werden.

Die Sensor-Einrichtung kann rückwärtig am Flurförderfahrzeug und/oder im Bereich des hinteren Endes der Ladeplattform angeordnet sein. Die Sensor-Einrichtung ist bevorzugt dazu eingerichtet mindestens ein Warnfeld und/oder mindestens ein Schutzfeld im Umfeld des Flurförderfahrzeug, insbesondere hinter dem Flurförderfahrzeug zu überwachen oder zumindest zu diesem Zweck beispielsweise mittels Laserstrahlen abzutasten bzw. zu scannen. Die Sensor-Einrichtung kann (auch) einen Sicherheitssensor des Flurförderfahrzeugs darstellen bzw. dessen Funktionen ausführen. Die Sensor-Einrichtung kann vorzugsweise als ein Laserscanner ausgeführt sein oder einen solchen umfassen. Die Sensor-Einrichtung ist in der Regel überwiegend nach hinten oder nach hinten und zu den Seiten (zu der linken Seite und der rechten Seite des Flurförderfahrzeugs) ausgerichtet. Es kann dabei vorgesehen sein, dass die Sensor-Einrichtung nicht nach oben ausgerichtet ist. Insbesondere kann das Flurförderfahrzeug hier beispielhaft ohne einen hinteren Ladeplattform-Sensor ausgeführt sein und/oder ein solcher bei der Erfassung gemäß der hier beschriebenen Ausgestaltung nicht zur Anwendung kommen.

In Schritt i) erfolgt ein Anfahren einer relativ zu dem Warenträger vordefinierten, initialen Position, wobei das Erreichen der initialen Position mittels einer Sensor-Einrichtung des Flurförderfahrzeugs detektiert wird. Die initiale Position kann beispielsweise derart relativ zum Warenträger vordefiniert sein, dass es sich hierbei um diejenige Position handelt, in der mindestens ein vorderes Identifikationsmittel des Warenträgers, wie etwa mindestens ein Vorderrad des Warenträgers (gerade bzw. erstmals) in einem mittels der Sensor-Einrichtung überwachten Warnfeld liegt. Vorzugsweise kann vorgesehen sein, dass hierbei beide Vorderräder des Warenträgers in jeweils einem Warnfeld (von zwei Warnfeldern) liegen (müssen). Diese (zwei) Warnfelder können beispielswiese an einem von dem Flurförderfahrzeug abgewandten bzw. hinteren Ende eines Schutzfeldes platziert sein, das (ebenfalls) mittels der Sensor-Einrichtung überwacht wird. Das Schutzfeld dient dabei in der Regel dazu, die weitere Bewegung zu verändern oder sogar zu stoppen, wenn ein Objekt im Schutzfeld detektiert wird. Dies bedeutet mit anderen Worten insbesondere, dass das Schutzfeld im Vergleich zum Warenfeld eine "härtere" Begrenzung für die Operationen des Flurförderfahrzeug darstellt.

In Schritt ii) erfolgt ein Abfahren einer vordefinierten Strecke entlang der Ausbreitungsrichtung, ausgehend von der initialen Position. Die Strecke ist dabei in der Regel so vordefiniert, dass sie geeignet ist, um mindestens zwei Typen von Warenträgern voneinander unterscheiden zu können, die sich in ihrer Länge entlang der Längsrichtung voneinander unterscheiden. Um die Strecke (ungehindert) abfahren zu können, kann es ggf. vorteilhaft sein, zunächst das Schutzfeld umzuschalten bzw. zu verändern, um den Warenträger (überhaupt) unterfahren zu können. Insbesondere kann das Schutzfeld hierbei (in seitlicher Richtung) schmäler geschaltet werden, sodass die Räder das Warenträgers (während des Unterfahrens des Warenträgers) nicht in dem Schutzfeld liegen. Bei dem Umschalten des Schutzfeldes können die Warnfelder ggf. näher an das Flurförderfahrzeug rücken. Ein dadurch ggf. zu berücksichtigender Distanzunterschied kann in die Vordefinition der Strecke mit einfließen bzw. dabei mit berücksichtigt werden.

In Schritt iii) erfolgt ein Durchführen eines weiteren Detektionsvorgangs mittels derselben Sensor-Einrichtung des Flurförderfahrzeugs, nachdem die vordefinierte Strecke abgefahren wurde. Insbesondere ist die Strecke so vordefiniert, das bei einem ersten (kürzeren) der mindestens zwei Typen von Warenträgern bei dem Detektionsvorgang gemäß Schritt iii) mindestens ein hinteres Identifikationsmittel des Warenträgers, wie etwa mindestens ein Hinterrad des Warenträgers (gerade bzw. erstmals) in dem mittels der Sensor-Einrichtung überwachten Warnfeld liegt. Vorzugsweise kann vorgesehen sein, dass hierbei beide Hinterräder des Warenträgers in jeweils einem Warnfeld (der zwei Warnfelder) liegen (müssen). Demnach würde bei einem Unterfahren eines zweiten (längeren) der mindestens zwei Typen von Warenträgern bei dem Detektionsvorgang gemäß Schritt iii) kein Identifikationsmittel des Warenträgers, insbesondere kein (Hinter-) Rad des Warenträgers in dem mittels der Sensor-Einrichtung überwachten Warnfeld liegen.

In einem Schritt iv) kann sich ein Auswerten des Detektionsvorgangs aus Schritt iii) erfolgen, insbesondere um in Abhängigkeit des Detektionsergebnisses aus Schritt iii) zu ermitteln, welcher Typ von Warenträger (aus mindestens zwei Typen von Warenträgern) gerade unterfahren bzw. aufgeladen wird. Dabei kann beispielsweise ermittelt werden, dass gerade ein erster (kürzerer) der mindestens zwei Typen von Warenträgern unterfahren bzw. aufgeladen wird, wenn nach dem Abfahren der vordefinierten Strecke das mindestens eine hintere Identifikationsmittel detektiert wird. Weiterhin kann beispielhaft ermittelt werden, dass gerade ein zweiter (längerer) der mindestens zwei Typen von Warenträgern unterfahren bzw. aufgeladen wird, wenn nach dem Abfahren der vordefinierten Strecke kein hinteres Identifikationsmittel detektiert wird. Alternativ oder kumulativ können nach Schritt iii) die Zustände der Warnfelder als Information für den weiteren Auf- und Abladevorgang abgespeichert werden. Weiterhin kann der (während des Aufladens) ermittelte Typ von Warenträger bzw. die ermittelte Länge des Warenträgers in einem Speicher des Flurförderfahrzeugs bis zum Abladen des Warenträgers gespeichert werden. Durch einen Zugriff auf diesen Speicher vor dem Abladen kann entsprechend eine Information über die Länge des Warenträgers für den Abladevorgang erfasst werden.

Nach einer vorteilhaften Ausgestaltung wird vorgeschlagen, dass die Schritte i) bis iii) während eines Aufladens des Warenträgers auf das Flurförderfahrzeug durchgeführt werden. Zum Aufladen des Warenträgers auf das Flurförderfahrzeug bzw. auf eine Ladeplattform des Flurförderfahrzeug kann der Warenträger beispielsweise von zumindest einem Teil des Flurförderfahrzeugs, wie etwa dem Längsabschnitt des Flurförderfahrzeugs mit der Ladeplattform unterfahren werden. Dies kann in vorteilhafter Weise dazu beitragen, dass (direkt) beim Aufladen des Warenträgers auf das Flurförderfahrzeug verschiedene Typen von Warenträgern (unterschiedlicher Länge) erkannt werden können.

Nach einer weiteren vorteilhaften Ausgestaltung wird vorgeschlagen, dass mittels der Sensor-Einrichtung mindestens ein Warnfeld im Umfeld des Flurförderfahrzeugs überwacht wird. Bevorzugt überwacht die Sensor-Einrichtung mindestens zwei Warnfelder hinter dem bzw. rückseitig des Flurförderfahrzeugs. Weiterhin kann mittels der Sensor-Einrichtung mindestens ein Schutzfeld im Umfeld des Flurförderfahrzeugs überwacht werden. Insbesondere kann (somit) ein (sonst) zum Personenschutz vorgesehener, rückwärtiger Laserscanner als Sensor-Einrichtung genutzt werden, um über zusätzliche Warnfelder, die zeitgleich zum (Personen-)Schutzfeld geschaltet und ggf. ausgewertet werden, das Erfassen der Information über die Ausbreitung (Länge) des Warenträgers und ggf. damit eine Unterscheidung zwischen mindestens zwei Typen von Warenträgern (unterschiedlicher Länge) zu ermöglichen.

Nach einer weiteren vorteilhaften Ausgestaltung wird vorgeschlagen, dass die Sensor-Einrichtung das mindestens eine Warnfeld mittels Laserstrahlen scannt. In diesem Zusammenhang kann die Sensor-Einrichtung beispielsweise als ein Laserscanner ausgeführt sein. Insbesondere handelt es sich dabei um einen Laserscanner der (sonst) auch zur Überwachung mindestens eine (Personen-)Schutzfelds im Umfeld des Flurförderfahrzeugs, insbesondere hinter dem Flurförderfahrzeug eingesetzt wird.

Nach einer weiteren vorteilhaften Ausgestaltung wird vorgeschlagen, dass das Umladen mindestens zwei vertikale Bewegungen der Ladefläche sowie ein Abfahren einer vordefinierten Strecke entlang der Längsrichtung des Warenträgers umfasst. In diesem Zusammenhang kann die Ladeplattform des Flurförderfahrzeugs beispielsweise als Hubplattform ausgeführt sein. Die Hubplattform kann insbesondere dazu eingerichtet sein die (gesamte) Ladefläche vertikal anzuheben und vertikal abzusenken. Insbesondere umfasst das Umladen mindestens zwei gleichgerichtete vertikale Bewegungen der Ladefläche. Die Strecke ist dabei in der Regel so vordefiniert, dass sie geeignet ist, um einen Warenträger, der kürzer ist als die Gesamtlänge der Ladefläche, auf der Ladefläche von hinten nach vorne (Aufladevorgang) oder von vorne nach hinten (Abladevorgang) umzuladen. Die vordefinierte Strecke kann einer Längendifferenz zwischen einem kürzeren der Warenträger (zum Beispiel: 400er Dolly) und einem längeren der Warenträger (zum Beispiel: 600er Dolly) entsprechen.

Weiterhin kann die Sensor-Einrichtung auch dazu genutzt werden, um bei einem Abladevorgang, insbesondere nach einem Umladen auf der Ladefläche, den abzuladenden Warenträger möglichst dicht vor einen weiteren Warenträger zu platzieren. Dabei kann das Flurförderfahrzeug mit dem (noch) aufgeladenen Warenträger beispielsweise so lange zurücksetzen bzw. rückwärts fahren, bis zumindest ein Teil des weiteren Warenträgers, wie beispielweise dessen Räder (Vorderräder oder Hinterräder) in mindestens einem Warnfeld liegt. Um die Warenträger besonders platzsparend anzuordnen, kann weiterhin vorgesehen sein, dass die Rückwärtsfahrt um eine Distanz fortgesetzt wird, die zur Kompensation der Länge des Warnfelds dient.

Nach einem weiteren Aspekt wird ein Computerprogramm zur Durchführung eines hier beschriebenen Verfahrens vorgeschlagen. Dies betrifft mit anderen Worten insbesondere ein Computerprogramm(-produkt), umfassend Befehle, die bei der Ausführung des Programms durch einen Computer diesen veranlassen, ein hier beschriebenes Verfahren auszuführen.

Nach einem weiteren Aspekt wird auch ein maschinenlesbares Speichermedium vorgeschlagen, auf dem das Computerprogramm gespeichert ist. Regelmäßig handelt es sich bei dem maschinenlesbaren Speichermedium um einen computerlesbaren Datenträger.

Nach einem weiteren Aspekt wird auch ein Steuergerät für ein zumindest teilweise automatisiert betreibbares Flurförderfahrzeug vorgeschlagen, wobei das Steuergerät zur Durchführung eines hier beschriebenen Verfahrens eingerichtet ist. Das Steuergerät (Controller) kann beispielsweise einen Rechner umfassen, der Befehle ausführen kann, um das Verfahren auszuführen. Hierzu kann der Rechner bzw. das Steuergerät beispielsweise das angegebene Computerprogramm ausführen. Beispielsweise kann der Rechner bzw. das Steuergerät auf das angegebene Speichermedium zugreifen, um das Computerprogramm ausführen zu können.

Nach einem weiteren Aspekt wird auch ein zumindest teilweise automatisiert betreibbares Flurförderfahrzeug mit dem Steuergerät vorgeschlagen. Alternativ oder kumulativ kann dies auch als ein zumindest teilweise automatisiert betreibbares Flurförderfahrzeug beschrieben werden, das zur Durchführung eines hier beschriebenen Verfahrens eingerichtet ist. Das Flurförderfahrzeugs ist darüber hinaus in der Regel für einen zumindest teilweise automatisierten oder autonomen (Fahr-)Betrieb eingerichtet.

Zusammenfassend kann eine besonders vorteilhafte Ausgestaltung der hier beschriebenen Lösung mit anderen Worten insbesondere (und ggf. alternativ) auch so beschrieben werden, dass ein zumindest teilweise automatisiert betreibbares Flurförderfahrzeug (autonomes Transportfahrzeug) dazu eingerichtet ist, wahlweise kurze und lange Warenträger (Dollys) transportieren zu können. Auch kurze Warenträger sollen dabei möglichst nahe an der Rückwand des Flurförderfahrzeugs positioniert werden können, insbesondere damit die Erkennung des Beladungszustandes möglichst zuverlässig funktioniert. Aufgrund der Länge der Ladeplattform könne die kurzen Dollys aber üblicherweise nicht vollständig unterfahren werden. Daher wird in vorteilhafter Weise nach Erkennung eines kurzen Dollys beim Beladen ein Umsetzungsvorgang (auf der Ladeplattform) ausgelöst. In umgekehrter Weise kann auch beim Abladen ein Umsetzungsvorgang (auf der Ladeplattform) verwendet werden.

Die im Zusammenhang mit dem Verfahren erörterten Details, Merkmale und vorteilhaften Ausgestaltungen können entsprechend auch bei dem hier vorgestellten Computerprogram und/oder dem Speichermedium und/oder dem Steuergerät und/oder dem Flurförderfahrzeug auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigt beispielhaft und schematisch:
- Fig. 1:: einen beispielhaften Ablauf des hier vorgestellten Verfahrens,
- Fig. 2:: eine Ausführungsform des hier beschriebenen Flurförderfahrzeugs in Schnittdarstellung,
- Fig. 3-6:: eine vorteilhafte Anwendung eines ersten Teils des hier beschriebenen Verfahrens in Draufsicht,
- Fig. 7:: einen beispielhaften Ablauf des hier vorgestellten Verfahrens bei einem Aufladevorgang, und
- Fig. 8:: einen beispielhaften Ablauf des hier vorgestellten Verfahrens bei einem Abladevorgang.

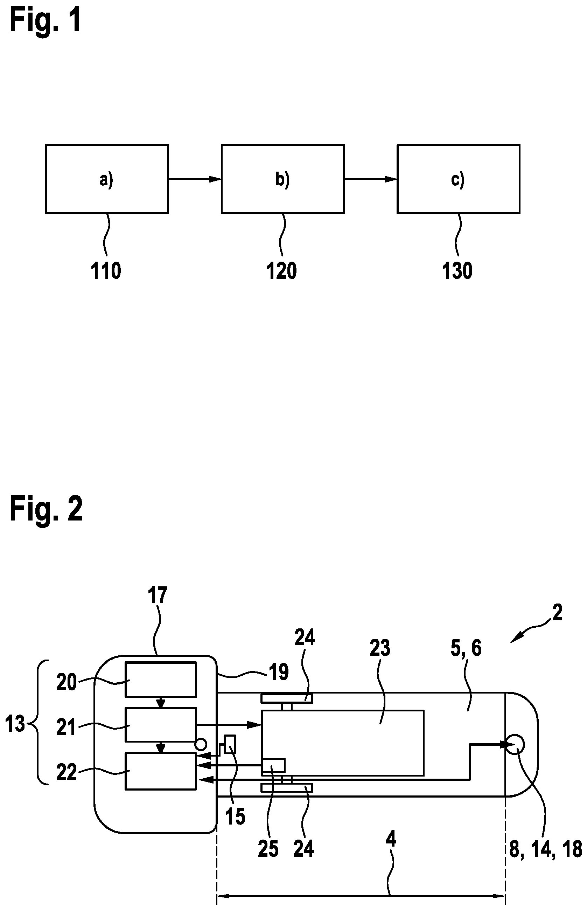

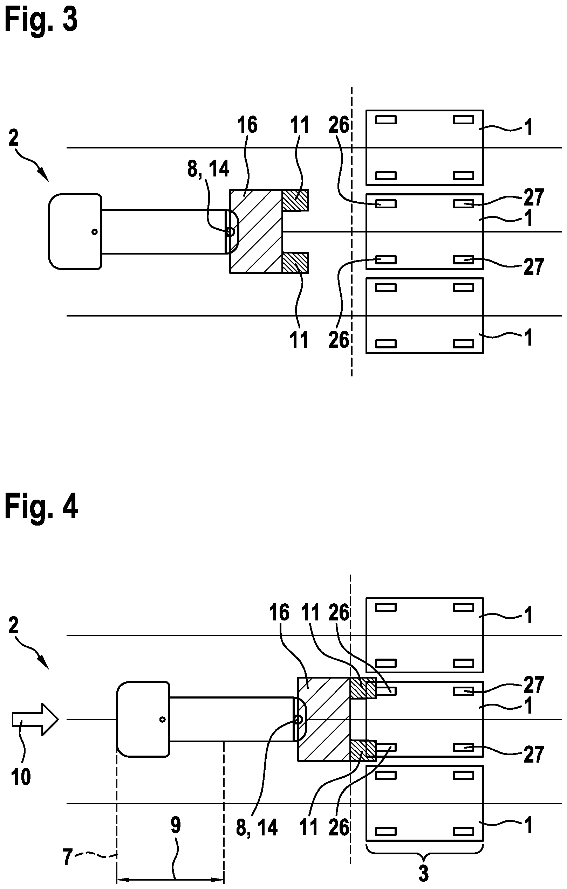

Fig. 1 zeigt schematisch einen beispielhaften Ablauf des hier vorgestellten Verfahrens. Das Verfahren dient zum Transportieren eines Warenträgers 1 (vgl. Fig. 3-6) mittels eines zumindest teilweise automatisiert betreibbaren Flurförderfahrzeugs 2 (vgl. Fig. 2). Die mit den Blöcken 110, 120 und 130 dargestellte Reihenfolge der Schritte a), b) und c) ist beispielhaft und kann zur Durchführung des Verfahrens beispielsweise zumindest einmal in der dargestellten Reihenfolge automatisiert von dem Flurförderfahrzeug 2 durchgeführt werden.

In Block 110 erfolgt gemäß Schritt a) ein Erfassen einer Information über die Länge 3 des Warenträgers 1. In Block 120 erfolgt gemäß Schritt b) ein Prüfen der erfassten Information über die Länge 3 des Warenträgers 1 in Relation zu einer Gesamtlänge 4 einer Ladefläche 5 einer Ladeplattform 6 des Flurförderfahrzeugs 2. In Block 130 erfolgt gemäß Schritt c) ein Durchführen eines mehrstufigen Aufladevorgangs oder Abladevorgans, umfassend zumindest ein Umladen des Warenträgers 1 auf der Ladeplattform 6, wenn die Länge 3 des Warenträgers 1 kleiner ist als die Gesamtlänge 4 der Ladefläche 5.

Fig. 2 zeigt schematisch eine beispielhafte Ausführungsform des hier beschriebenen Flurförderfahrzeugs 2 in Schnittdarstellung. Das Flurförderfahrzeugs 2 ist für einen zumindest teilweise automatisierten oder autonomen (Fahr-)Betrieb eingerichtet. Weiterhin ist das Flurförderfahrzeug 2 zur Durchführung eines hier beschriebenen Verfahrens eingerichtet. Hierzu weist das Flurförderfahrzeug 2 beispielhaft ein hier auch beschriebenes Steuergerät 13 und vorzugsweise eine Sensor-Einrichtung 8 auf, die mit dem Steuergerät 13 zur Datenübertragung verbindbar bzw. verbunden ist. Das Steuergerät 13 ist zur Durchführung des beschriebenen Verfahrens eingerichtet.

Das Flurförderfahrzeug 2 weist einen Vorderaufbau 17 und eine Ladeplattform 6 auf. Die Ladeplattform 6 hat eine Ladefläche 5, mit welcher ein Warenträger 1 in Kontakt bringbar ist. Die Ladeplattform 6 kann in der Art einer Hubplattform gebildet sein, sodass die Ladefläche 5 vertikal bewegt werden kann. Der Vorderaufbau 17 hat hin zu der Ladeplattform 6 eine im wesentlichen vertikale Rückwand 19. In dem Bereich, in dem die Ladeplattform 6 an die Rückwand 19 angrenzt bzw. an dieser endet, ist beispielhaft ein Ladeplattform-Sensor 15 des Flurförderfahrzeugs 3 angeordnet. Dieser Bereich liegt in der Regel am vorderen Ende der Ladeplattform 6. Der Ladeplattform-Sensor 15 dient üblicherweise zur Erkennung der korrekten Lagerung des Warenträgers 1 auf der Ladeplattform 6. Korrekt ist die Lagerung des Warenträgers 1 insbesondere dann, wenn der Warenträger 1 ausreichend nah zu der Rückwand 19 angeordnet ist. Der Ladeplattform-Sensor 15 kann beispielsweise ein induktiver Sensor sein. Weiterhin kann der Ladeplattform-Sensor 15 nach oben ausgerichtet sein. Weiterhin weist das Flurförderfahrzeug 2 hier beispielhaft im Bereich des hinteren Endes der Ladeplattform 6 eine Sensor-Einrichtung 8 auf. Die Sensor-Einrichtung 8 ist in der Regel dazu eingerichtet mindestens ein Warnfeld 11 und/oder mindestens ein Schutzfeld 16 im Umfeld des Flurförderfahrzeug 2, insbesondere hinter dem Flurförderfahrzeug 2 zu überwachen oder zumindest zu diesem Zweck beispielsweise mittels Laserstrahlen abzutasten bzw. zu scannen. Die eigentliche Überwachung kann dann beispielhaft von dem Steuergerät 13 oder einer vergleichbaren Einrichtung des Flurförderfahrzeugs 2 durchgeführt werden. Die Sensor-Einrichtung 8 kann somit (auch) einen Sicherheitssensor 18 des Flurförderfahrzeugs 2 darstellen. Die Sensor-Einrichtung 8 kann vorzugsweise als ein Laserscanner 14 ausgeführt sein oder einen solchen umfassen. Die Sensor-Einrichtung 8 ist in der Regel überwiegend nach hinten oder nach hinten und zu den Seiten (zu der linken Seite und der rechten Seite des Flurförderfahrzeugs 2) ausgerichtet. Es kann dabei vorgesehen sein, dass die Sensor-Einrichtung 8 nicht nach oben ausgerichtet ist. Weiterhin ist in Fig. 2 zu erkennen, dass das Flurförderfahrzeug 2 hier beispielhaft ohne einen hinteren Ladeplattform-Sensor ausgeführt ist, da dieser hier vorteilhaft eingespart werden kann.

Das Steuergerät 13 umfasst hier beispielhaft ein Robotersteuermodul 20 (engl.: Robot Control Unit; kurz: RCU), ein Bewegungssteuermodul 21 (engl.: Motion Control Unit; kurz MCU) und ein Sicherheitssteuermodul 22 (engl.: Safety Control Unit; kurz SCU). Das Robotersteuermodul 20 gibt hier beispielsweise die gewünschte Fahrtrichtung und die Geschwindigkeit an das Bewegungssteuermodul 21. Das Bewegungssteuermodul 21 gibt die gewünschte Fahrtrichtung hier beispielhaft weiter an das Sicherheitssteuermodul 22, berechnet die Solldrehzahlen und gibt diese an eine Motoreinrichtung 23 des Flurförderfahrzeugs 2. Die Motoreinrichtung 23 kann einen oder mehrere (Elektro-) Motoren aufweisen, die ggf. über ein Getriebe oder direkt mit angetriebenen Rädern 24 des Flurförderfahrzeugs 2, ggf. im Sinne individuell angetriebener Räder 24 wirkverbunden sind.

Weiterhin kann das Flurförderfahrzeug 2 einen oder mehrere Drehzahlgeber 25 (zum Beispiel SIL2-Drehgeber) aufweisen, welche die Ist-Drehzahlen der Motoren 23 bzw. Räder 24 an das Sicherheitssteuermodul 22 übermitteln. Das Sicherheitssteuermodul 22 kann hier beispielsweise aus den Ist-Drehzahlen den Verfahrweg bzw. die zurückgelegte Strecke (sichere Radodometrie) berechnen und/oder insbesondere in Abhängigkeit der gewünschten Fahrtrichtung das entsprechende mindestens eine Warnfeld 11 und/oder mindestens eine Schutzfeld 16 (Laserscannerfeld) schalten.

Zur Durchführung einer vorteilhaften Ausgestaltung des Verfahrens kann das Steuergerät 13 beispielsweise für folgende Vorgehensweise eingerichtet sein: Während ein Warenträger 1 angefahren wird (vgl. Fig. 3) schaltet das Sicherheitssteuermodul 22 zwei Warnfelder 11 und ein Schutzfeld 16, die mittels der Sensor-Einrichtung 8 (hier beispielhaft Laserscanner 14) überwacht werden. Dabei werden die zwei Warnfelder 11 hinter dem Schutzfeld 16 und mit einem derartigen (vordefinierbaren) seitlichen Abstand zueinander geschaltet, dass sie gleichzeitig zwei Vorderräder 26 des Warenträgers 1 (mit jeweils (nur) einem der Vorderräder 26 in einem der Warnfelder 11) erfassen können. Der Anfahrvorgang wird damit fortgesetzt, bis das Sicherheitssteuermodul 22 erkennt, dass die beiden Warnfelder 11 auslösen (Dolly-Erkennung). Die dabei erreichte Position wird hier auch als initiale Position 7 bezeichnet (vgl. Fig. 4). Dies stellt ein Beispiel dafür dar, dass und ggf. wie gemäß Schritt i) ein Anfahren einer relativ zu dem Warenträger 1 vordefinierten, initialen Position 7 erfolgen kann, wobei das Erreichen der initialen Position 7 mittels einer Sensor-Einrichtung 8 des Flurförderfahrzeugs 2 detektiert wird.

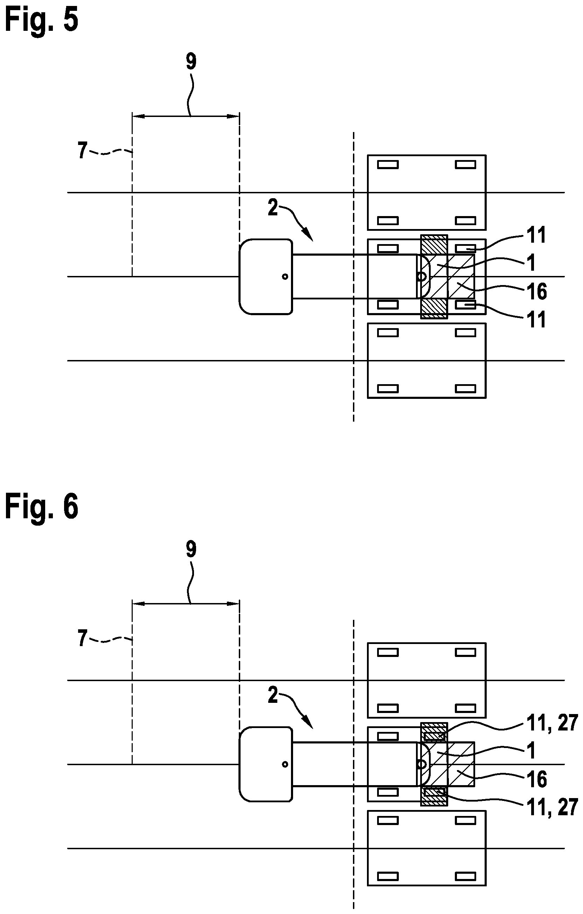

Danach kann das Sicherheitssteuermodul 22 die Sensor-Einrichtung 8 auf ein schmaleres Schutzfeld 16 umschalten, wobei ggf. die (Längs-)Position der Warnfelder 11 hin zu dem Flugförderfahrzeug 2 rücken kann (vgl. Fig. 5). Mit dieser Konfiguration kann der Ladevorgang in Längsrichtung 10 des Warenträgers 1 fortgesetzt werden, um eine vordefinierte Strecke 9, ausgehend von der initialen Position 7 abzufahren. Dies stellt ein Beispiel dafür dar, dass und ggf. wie gemäß Schritt ii) ein Abfahren einer vordefinierten Strecke 9 entlang der Längsrichtung 10, ausgehend von der initialen Position 7 erfolgen kann.

Nachdem die Strecke 9 zurückgelegt wurde kann das Sicherheitssteuermodul 22 die momentane bzw. dann aktuelle Erfassung der Sensor-Einrichtung 8 innerhalb der beiden Warnfelder 11 erneut auswerten. Dies stellt ein Beispiel dafür dar, dass und ggf. wie gemäß Schritt iii) ein Durchführen eines weiteren Detektionsvorgangs mittels derselben Sensor-Einrichtung 8 des Flurförderfahrzeugs 2 erfolgen kann, nachdem die vordefinierte Strecke 9 abgefahren wurde. Wenn in diesem Zustand keine Erfassung in den Warnfeldern 11 erkannt wird oder zumindest keine Erfassung von weiteren Rädern, insbesondere Hinterrädern 27 des Warenträgers 1 erkannt wird, kann damit darauf zurückgeschlossen werden, dass ein längerer Warenträger 1 (hier 600er Dolly) aufgeladen wird (vgl. Fig. 5). Wenn in diesem Zustand eine Erfassung in den Warnfeldern 11, insbesondere eine Erfassung von weiteren Rädern, insbesondere Hinterrädern 27 des Warenträgers 2 erkannt wird, kann damit darauf zurückgeschlossen werden, dass ein kürzerer Warenträger 2 (hier 400er Dolly) aufgeladen wird (vgl. Fig. 6).

Somit können im Verlauf eines Aufladevorgangs die Zustände der beiden Warnfelder 11 vorteilhaft zur Unterscheidung zwischen verschiedenen Warenträgern 1, insbesondere zwischen 400er und 600er Dollys verwendet werden. Die beschriebene vorteilhafte Ausgestaltung des Verfahrens stellt ein Beispiel dafür dar, wie zum Ermitteln der Information über die Länge 3 des Warenträgers 1 vorgegangen werden kann. Auf diese Information kann in Schritt
a) beispielhaft zurückgegriffen werden.

Die Figuren 3 bis 6 zeigen beispielhaft und schematisch eine vorteilhafte Anwendung eines ersten Teils des hier beschriebenen Verfahrens in Draufsicht. Dabei veranschaulichen die Figuren 3 bis 6 eine besonders vorteilhafte Ausgestaltung zur Ermittlung der Information über die Länge 3 des Warenträgers 1, auf die in Schritt a) zum Erfassen der Information über die Länge 3 des Warenträgers 1 zurückgegriffen werden kann. Dabei wird beispielhaft ein mit dem Verfahren möglicher Ablauf einer Aufladesituation in beispielweise einem Supermarkt gezeigt. Dies stellt auch ein Beispiel dafür dar, dass und ggf. wie die Schritte i) bis iii) während eines Aufladens des Warenträgers 1 auf das Flurförderfahrzeug 2 durchgeführt werden können.

In den Figuren 3 und 4 ist dabei gezeigt, dass das Flurförderfahrzeug 2 mit der Sensor-Einrichtung 8 (rückwärtsgerichteter Laserscanner 14) beim Einfahren in einen Supermarkt den hinter sich befindlichen Bereich scannen bzw. überwachen kann. Die durchgezogenen Linien stellen beispielhafte Supermarktspuren dar, auf denen üblicherweise auch mehrere Warenträger in Längsrichtung 10 hintereinander aufgereiht werden können. Beim Anfahren eines Warenträgers 1 können zwei Warnfelder 11 unabhängig voneinander das jeweils linke und rechte (Vorder-) Rad 26 (bzw. Rad 26 der Vorderachse) des aufzunehmenden Warenträgers 1 (hier beispielhaft Bodenroller bzw. Dolly) erkennen. Dies beschreibt somit auch ein Beispiel dafür, dass und ggf. wie die Sensor-Einrichtung 8 mindestens ein Warnfeld 11, hier insbesondere zwei Warnfelder 11 im Umfeld des Flurförderfahrzeugs 2 überwachen kann. Beispielhaft kann hier die Sensor-Einrichtung 8 die Warnfelder 11 mittels Laserstrahlen scannen.

In den Figuren 5 und 6 ist gezeigt, dass nach erfolgreicher Erkennung der Vorderräder 26 der Laserscanner 14 auf ein schmaleres Schutzfeld 16 umgeschaltet werden kann und damit die vordefinierte Streck 9 gefahren werden kann, die hier beispielhaft insbesondere zur Unterscheidung eines 600er Dollys (Fig. 5: die Warnfelder 11 sind frei) und eines 400er Dollys (Fig. 6: die Warnfelder 11 erkennen die Hinterräder 27 bzw. Räder 27 der zweiten Dollyachse) geeignet ist. In diesem Moment kann das Sicherheitssteuermodul 22 die Zustände der Warnfelder 11 des Laserscanners 14 (erneut) abfragen und diese vorzugsweise als Information für den weiteren Auf- und Abladevorgang abspeichern. Diese Information kann beispielsweise in Schritt a) zum Erfassen der Information über die Länge 3 des Warenträgers 1 eingelesen werden.

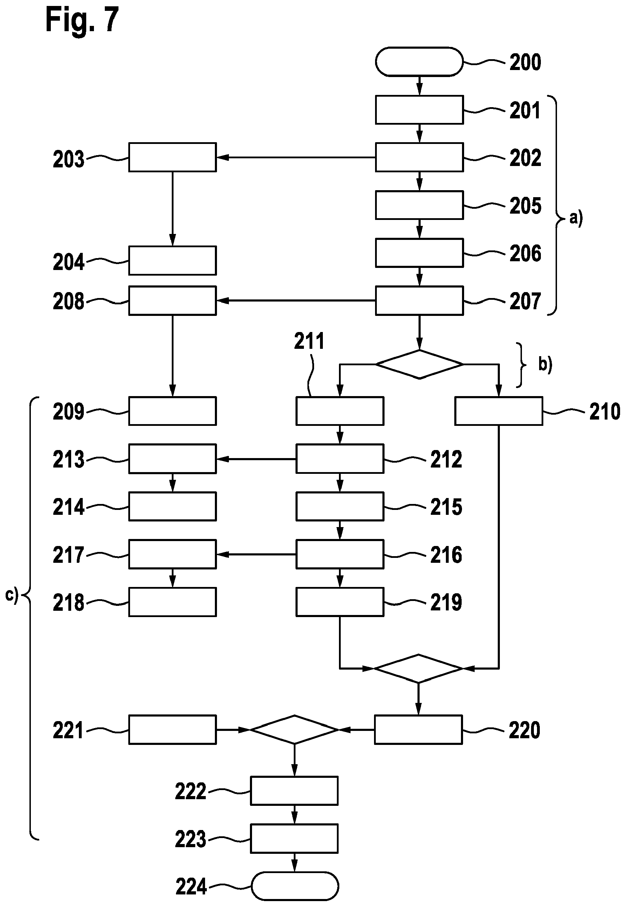

Fig. 7 zeigt beispielhaft und schematisch einen beispielhaften Ablauf des hier vorgestellten Verfahrens bei einem Aufladevorgang. Das gezeigte Beispiel wird anhand eines Ablaufplans mit Blöcken 200 bis 224 beschrieben. In Block 200 fährt das Flurförderfahrzeug 2 beispielhaft in einen Supermarkt ein und ein beispielhafter Aufladevorgang startet.

In Block 201 startet eine Rückfahrt des Flurförderfahrzeug 2, bei der die zurückgelegte Strecke überwacht wird.

In Block 202 erfolgt eine Abfrage der Warnfelder 11 des hinteren Laserscanners 8,14. In Block 203 erfolgt ein Zurücksetzen des Wertes zur Überwachung der zurückgelegten Strecke. In Block 204 erfolgt ein Überwachen der zurückgelegten Wegstrecke. Insbesondere können zwei Warnfelder 11 (linkes und rechtes Rad 26 der Vorderachse des aufzunehmenden Warenträgers 1) über beispielsweise digitale Ausgänge an das Steuergerät 13 (SPS) melden, dass die Erkennung der beiden Felder angeschlagen hat. Die Distanz für die Überwachung der zurückgelegten Strecke wird in diesem Fall zurückgesetzt.

In Block 205 erfolgt ein Umschalten auf schmales Schutzfeld 16. In Block 206 wird die Rückfahrt für eine bestimmte Länge fortgesetzt. Dabei kann es sich beispielsweise um den Achsabstand zwischen Vorderachse und Hinterachse eines kürzeren, insbesondere 400mm langen Warenträgers 1 (Dollys) handeln. Dies stellt auch ein Beispiel für die Vordefinition der Strecke 9 dar. In Block 207 erfolgt ein (erneutes) Abfragen der Warnfelder. Dabei wird beispielsweise der boolesche Wert (400mm-Dolly Hinterachse gefunden, oder nicht) in einem Speicher, zum Beispiel FlipFlop gespeichert.

Wenn es sich um einen 400mm Warenträger 1 handelt, melden insbesondere zwei Warnfelder 11 (linkes und rechtes Rad 27 der Hinterachse eines 400mm Warenträgers) über digitale Ausgänge an das Steuergerät 13 (SPS), dass die Erkennung der beiden Felder angeschlagen hat (vgl. Fig. 6). Wenn es sich um einen 600mm Warenträger 1 handelt, ist die Hinterachse nach der gefahrenen Strecke 9 noch außerhalb des Erfassungsbereichs der Warnfelder 11 (vgl. Fig. 5).

In Block 208 erfolgt ein Zurücksetzen des Wertes zur Überwachung der zurückgelegten Strecke. In Block 209 erfolgt ein Überwachen der zurückgelegten Wegstrecke. Dabei kann sich die Wegstrecke an der Länge der Ladefläche 5 (Hubfläche) und des Warenträgers 1 (Bodenroller) orientieren. Das Flurförderfahrzeug 2 kann dabei unter den Warenträger 1 fahren, bis die Hinterkante der Ladeplattform 6 leicht über die Hinterkante des Warenträgers 1 hervorsteht.

Nach Block 207 erfolgt eine Fallunterscheidung. Wenn die Abfrage in Block 207 positiv war (400mm-Dolly Hinterachse wurde gefunden) wird mit Block 211 fortgefahren. Wenn Die Abfrage in Block 207 negativ war, wird mit Block 210 fortgefahren. In Block 210 wird die Rückwärtsfahrt für eine bestimmte Länge fortgesetzt. Dabei kann sich die Länge beispielsweise am Achsabstand zwischen der Vorderachse und der Hinterachse eines 600mm-Dolly orientieren.

In Block 211 wird die Rückfahrt für eine bestimmte Länge fortgesetzt. Dabei kann sich die Länge beispielsweise am Achsabstand zwischen der Vorderachse und der Hinterachse eines 400mm-Dolly orientieren. In Block 212 erfolgt ein Stillstand des Flurförderfahrzeugs 2 und ein Anheben der Ladefläche 5 (Hubplattform). In Block 213 erfolgt ein Zurücksetzen des Wertes zur Überwachung der zurückgelegten Strecke. In Block 214 erfolgt ein Überwachen der zurückgelegten Wegstrecke. Dabei kann sich die Wegstrecke an benötigtem Platz für ein erneutes Aufladen des kürzeren, insbesondere 400mm langen Warenträgers 1 orientieren. Dabei sollte kein weiterer (in Längsrichtung bzw. in einer Spur dahinter angeordneter) Warenträger aufgenommen werden.

In Block 215 erfolgt eine Vorwärtsfahrt für eine/die bestimmte Wegstrecke. In Block 216 erfolgt ein Stillstand des Flurförderfahrzeugs 2 und ein Ablassen der Ladefläche 5 (Hubplattform). In Block 217 erfolgt ein Zurücksetzen des Wertes zur Überwachung der zurückgelegten Strecke. In Block 218 erfolgt ein Überwachen der zurückgelegten Wegstrecke. Dabei kann sich die Wegstrecke an der Länge der Ladefläche 5 und des Warenträgers 1 orientieren.

In Block 219 erfolgt eine Rückwärtsfahrt für eine bestimmte Wegstrecke. In Block 220 erfolgt eine Rückwärtsfahrt mit stark verringerter Geschwindigkeit (zum Beispiel 0,05m/s). Mit anderen Worten befindet sich das Flurförderfahrzeug in Block 220 im Modus der langsamen Rückwärtsfahrt. In Block 221 erfolge ein Überwachen des Sensorwertes zur Ladungserkennung (Ladeplattform-Sensor 15). Dabei meldet der Ladeplattform-Sensor 15 für die Ladungserkennung das Erkennen des Warenträgers 1, wenn dieser insbesondere ausreichend nah an der Rückwand 19 angekommen ist.

In Bock 222 wird die Rückwärtsfahrt mit stark verringerter Geschwindigkeit beendet. In Block 223 erfolgt ein Stillstand des Flurförderfahrzeugs 2 und ein Anheben der Ladefläche 5 (Hubplattform). In Block 224 ist der Aufladevorgang abgeschlossen.

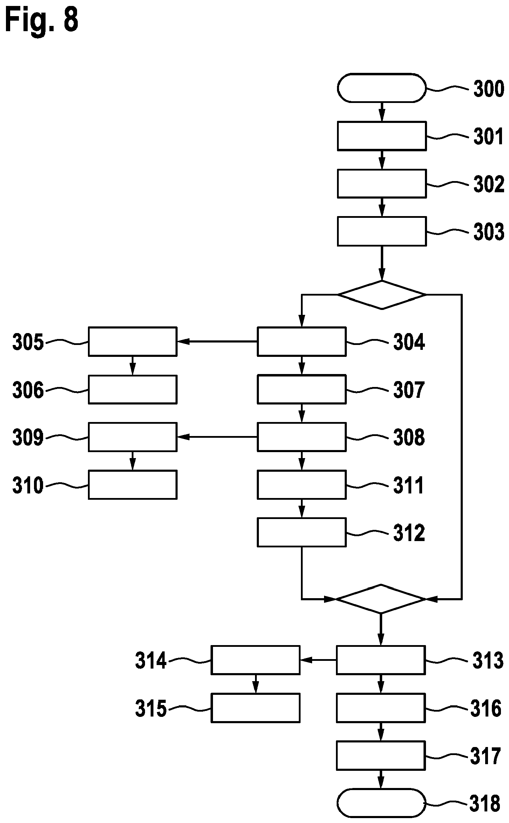

Fig. 8 zeigt beispielhaft und schematisch einen beispielhaften Ablauf des hier vorgestellten Verfahrens bei einem Abladevorgang. Das gezeigte Beispiel wird anhand eines Ablaufplans mit Blöcken 300 bis 318 beschrieben. In Block 300 fährt das Flurförderfahrzeug 2 beispielhaft in einen Supermarkt ein und ein beispielhafter Abladevorgang startet.

In Block 301 startet eine Rückfahrt, bei der die zurückgelegte Strecke überwacht wird.

In Block 302 erfolgt eine Abfrage der Warnfelder 11 des hinteren Laserscanners 14.

Zwei Warnfelder 11 (linkes und rechtes Rad 26 der Vorderachse eines bereits in der Supermarktspur vorhandenen Warenträgers 1) melden über digitale Ausgänge an das Steuergerät 13 (SPS), dass die Erkennung der beiden Felder 11 angeschlagen hat. Die Distanz für die Überwachung der zurückgelegten Strecke wird zurückgesetzt.

In Block 303 erfolgt eine Abfrage des booleschen Wertes (400mm-Dolly Hinterachse gefunden, oder nicht) aus beispielsweise einem Speicher (zum Beispiel FlipFlop). Nach Block 303 erfolgt eine Fallunterscheidung. Wenn die Abfrage in Block 303 positiv war (400mm-Dolly Hinterachse wurde bei vorherigem Aufladen gefunden) wird mit Block 304 fortgefahren. Wenn die Abfrage in Block 303 negativ war, wird mit Block 313 fortgefahren.

In Block 304 erfolgt ein Stillstand des Flurförderfahrzeugs 2 und ein Ablassen der Ladefläche 5 (Hubfläche). In Block 305 erfolgt ein Zurücksetzen des Wertes zur Überwachung der zurückgelegten Strecke. In Block 306 erfolgt eine Überwachung der zurückgelegten Strecke. Die Wegstrecke orientiert sich dabei an der Längendifferenz zwischen einem kürzeren der Warenträger 1 (zum Beispiel: 400er Dolly) und einem längeren der Warenträger 1 (zum Beispiel: 600er Dolly).

In Block 307 erfolgt eine Vorwärtsfahrt für eine/die bestimmte Wegstrecke. In Block 308 erfolgt ein Stillstand des Flurförderfahrzeugs 2 und ein Anheben der Ladefläche 5 (Hubplattform). In Block 309 erfolgt ein Zurücksetzen des Wertes zur Überwachung der zurückgelegten Strecke. In Block 310 erfolgt ein Überwachen der zurückgelegten Strecke.

In Block 311 erfolgt eine Rückwärtsfahrt mit normaler Geschwindigkeit (zum Beispiel 0,1m/s). In Block 312 erfolgt eine Abfrage der Warnfelder 11 des hinteren Laserscanners 14. Dabei können zwei Warnfelder 11 (linkes und rechtes Rad der Vorderachse eines bereits in der Supermarktspur vorhandenen Warenträgers 1) über digitale Ausgänge an das Steuergerät 13 melden, dass die Erkennung der beiden Felder 11 angeschlagen hat. Die Distanz für die Überwachung der zurückgelegten Strecke wird zurückgesetzt.

In Block 313 erfolgt eine Rückwärtsfahrt mit stark verringerter Geschwindigkeit (zum Beispiel 0,05m/s). Mit anderen Worten befindet sich das Flurförderfahrzeug in Block 313 im Modul der langsamen Rückwärtsfahrt. In Block 314 erfolgt ein Zurücksetzen des Wertes zur Überwachung der zurückgelegten Strecke. In Block 315 erfolgt eine Überwachung der zurückgelegten Strecke. Die Wegstrecke kann sich dabei an der Länge der hinteren Warnfelder 11 orientieren. Die Warenträger 1 sollen dadurch möglichst platzsparend aneinander bzw. hintereinander platziert werden, jedoch möglichst ohne sich zu berühren.

In Block 316 erfolgt eine Rückwärtsfahrt für eine bestimmte Wegstrecke. In Block 317 erfolgt ein Stillstand des Flurförderfahrzeugs 2 und ein Ablassen der Ladefläche 5 (Hubplattform). In Bock 318 ist der Abladevorgang abgeschlossen.

Insbesondere die Blöcke 212, 215, 216 und 223 bzw. 304, 307, 308 und 317 stellen Beispiele dafür dar, dass und ggf. wie das Umladen mindestens zwei vertikale Bewegungen der Ladefläche 5 sowie ein Abfahren einer vordefinierten Strecke entlang der Längsrichtung 10 des Warenträgers 1 umfassen kann.

### Bezugszeichenliste

- 1: Warenträger
- 2: Flurförderfahrzeug
- 3: Länge
- 4: Gesamtlänge
- 5: Ladefläche
- 6: Ladeplattform
- 7: initiale Position
- 8: Sensor-Einrichtung
- 9: Strecke
- 10: Längsrichtung
- 11: Warnfeld

- 13: Steuergerät
- 14: Laserscanner
- 15: Ladeplattform-Sensor
- 16: Schutzfeld
- 17: Vorderaufbau
- 18: Sicherheitssensor
- 19: Rückwand
- 20: Robotersteuermodul
- 21: Bewegungssteuermodul
- 22: Sicherheitssteuermodul
- 23: Motoreinrichtung
- 24: Rad
- 25: Drehzahlgeber
- 26: Vorderrad
- 27: Hinterrad

## Patentansprüche

1. Verfahren zum Transportieren eines Warenträgers (1) mittels eines zumindest teilweise automatisiert betreibbaren Flurförderfahrzeugs (2), bei dem zumindest folgende Schritte automatisiert von dem Flurförderfahrzeug (2) durchgeführt werden:
a) Erfassen einer Information über die Länge (3) des Warenträgers (1),
b) Prüfen der erfassten Information über die Länge (3) des Warenträgers (1) in Relation zu einer Gesamtlänge (4) einer Ladefläche (5) einer Ladeplattform (6) des Flurförderfahrzeugs (2),
c) Durchführen eines mehrstufigen Aufladevorgangs oder Abladevorgans, umfassend zumindest ein Umladen des Warenträgers (1) auf der Ladeplattform (6), wenn die Länge (3) des Warenträgers (1) kleiner ist als die Gesamtlänge (4) der Ladefläche (5).

2. Verfahren nach Anspruch 1, wobei zum Ermitteln der Information über die Länge (3) des Warenträgers (1) zumindest folgende Schritte automatisiert von dem Flurförderfahrzeug (2) durchgeführt werden:
i) Anfahren einer relativ zu dem Warenträger (1) vordefinierten, initialen Position (7), wobei das Erreichen der initialen Position (7) mittels einer Sensor-Einrichtung (8) des Flurförderfahrzeugs (2) detektiert wird,
ii) Abfahren einer vordefinierten Strecke (9) entlang der Längsrichtung (10) des Warenträgers (1), ausgehend von der initialen Position (7),
iii) Durchführen eines weiteren Detektionsvorgangs mittels derselben Sensor-Einrichtung (8) des Flurförderfahrzeugs (2), nachdem die vordefinierte Strecke (9) abgefahren wurde.

3. Verfahren nach Anspruch 2, wobei die Schritte i) bis iii) während eines Aufladens des Warenträgers (1) auf das Flurförderfahrzeug (2) durchgeführt werden.

4. Verfahren nach Anspruch 2 oder 3, wobei mittels der Sensor-Einrichtung (8) mindestens ein Warnfeld (11) im Umfeld des Flurförderfahrzeugs (2) überwacht wird.

5. Verfahren nach Anspruch 4, wobei die Sensor-Einrichtung (8) das mindestens eine Warnfeld (11) mittels Laserstrahlen scannt.

6. Verfahren nach einem der vorhergehenden Ansprüche, wobei das Umladen mindestens zwei vertikale Bewegungen der Ladefläche (5) sowie ein Abfahren einer vordefinierten Strecke entlang der Längsrichtung (10) des Warenträgers (1) umfasst.

7. Computerprogramm zur Durchführung eines Verfahrens nach einem der vorhergehenden Ansprüche.

8. Maschinenlesbares Speichermedium, auf dem das Computerprogramm nach Anspruch 7 gespeichert ist.

9. Steuergerät (13) für ein zumindest teilweise automatisiert betreibbares Flurförderfahrzeug (2), eingerichtet zur Durchführung eines Verfahrens nach einem der Ansprüche 1 bis 6.

10. Zumindest teilweise automatisiert betreibbares Flurförderfahrzeug (2) mit einem Steuergerät (13) nach Anspruch 9.
